# EUROPEAN PATENT SPECIFICATION

(11) **EP 2 068 504 B1**
(45) Date of publication and mention of the grant of the patent: **14.03.2012**
(21) Application number: 07720842.9
(22) Date of filing: 18.04.2007
(51) Int. Cl.: H04L 12/46, H04Q 11/00

(54) **METHOD, SYSTEM AND APPARATUS FOR SDH FRAME TRANSMISSION OVER OPTICAL NETWORKS**
VERFAHREN, SYSTEM UND VORRICHTUNG ZUR ÜBERTRAGUNG VON SDH-RAHMEN ÜBER OPTISCHE NETZE
PROCÉDÉ, SYSTÈME ET APPAREIL DESTINÉS À UNE TRANSMISSION DE TRAMES PAR RÉSEAUX OPTIQUES

(30) Priority: 18.10.2006 CN 200610139161
(43) Date of publication of application: 10.06.2009
(73) Proprietor: Huawei Technologies Co., Ltd., Longgang District, Shenzhen Guangdong 518129 (CN)
(72) Inventor: DONG, Limin, Guangdong 518219 (CN)
(74) Representative: Thun, Clemens
(86) International application number: PCT/CN2007/001269
(87) International publication number: WO 2008/046280

(56) References cited:
- EP-A1- 1 467 590
- CN-A- 1 536 812
- CN-A- 1 601 982
- CN-C- 1 104 789
- US-A1- 2004 246 989
- US-A1- 2004 246 989
- "Gigabit-capable Passive Optical Networks (GPON): General characteristics; G.984.1 (03/03)" ITU-T STANDARD IN FORCE (I), INTERNATIONAL TELECOMMUNICATION UNION, GENEVA, CH, no. G.984.1 (03/03), 16 March 2003 (2003-03-16), XP017401194
- EBERSPAECHER K: "DIE SYNCHRONE DIGITALE HIERARCHIE" NACHRICHTENTECHNISCHE BERICHTE, ANT NACHRICHTENTECHNIK GMB. BACKNANG, DE, no. 9, 1 April 1992 (1992-04-01), pages 7-13, XP000331271
- LI Y.-S. ET AL.: 'The Key Technologies of GPON-GEM Encapsulation Optical Communication Technology' no. 12, December 2005, pages 4 - 7, XP008104890
- 'Gigabit-capable Passive Optical Networks (GPON); Transmission Convergence Layer Specification Amendment3' ITU-T RECOMMENDATION G.984.3 December 2006,

## Description

### FIELD OF THE INVENTION

The present invention relates to the network transmission field, and in particular, to a method, a system and an apparatus for transmitting Synchronous Digital Hierarchy (SDH) frames on an optical network.

### BACKGROUND

In the current network transmission field, multiple technologies coexist on the access network layer. Three mature access technologies currently available are: copper cable access, fiber access, and wireless access. As a broadband optical access technology, the Passive Optical Network (PON) is characterized by a point-to-multipoint (P2MP) physical topology and consists of an Optical Line Terminal (OLT), a passive Optical Distribution Network (ODN) and multiple Optical Network Units (ONUs). Multiple ONUs share fiber resources and OLT terminals.

An Optical Distribution Point (ODP) in a passive Optical Distribution Network (ODN) does not need any active node devices, but needs only a passive Optical Branching Device (OBD). Therefore, the PON has these merits: shared bandwidth resources, less investment required for equipment rooms, high security of equipment, fast network deployment and low overall cost of network deployment.

However, as bottlenecked by multiple factors such as access services and geographic distribution characteristics, the application modes of a PON come in many types such as Fiber To The Home (FTTH), Fiber To The Neighbor (FTTN), Fiber To The Curb (FTTC), and Fiber To The Building (FITB). The FTTN means that the fiber is connected to an active access node, and the active access node is connected to the end user terminal by other technical means.

The Synchronous Digital Hierarchy (SDH) is a mature transfer network technology hierarchy which provides Synchronous Transfer Module (STM)-1/4/16/64/256 rate. The SDH provides perfect overhead monitoring and protection means, and has been a mainstream technology of transmission networks. By now, plenty of SDH devices or the devices with SDH interfaces have been deployed on the network.

Many standards are currently available for the PON, including Broadband Passive Optical Network (BPON) and the latest Gigabit Passive Optical Network (GPON) released by the International Telecommunication Union - Telecommunication Standardization Sector (ITU-T). The downlink rate of the GPON is 1.25 G or 2.5 G, and the uplink rate may be 622 M, 1.25 G, 2.5 G, and so on. The frame structure of a GPON uses 125 microseconds as a period. The basic frame structure of the service transmitted by the GPON is a GPON Encapsulation Method (GEM) frame, which is suitable for transmission of data services such as Ethernet, and for transmission of the services such as Time Division Multiplexing (TDM). The frame length and the line rate of a GPON are the same as those of a SDH. Moreover, the line rate of a GPON is up to 2.5 G now, and is evolving to 10 G, which ensures the GPON to be accessible to various services.

Currently, the requirement of connecting SDH interface services already occurs in the coverage scope of the access network, for example, the SDH line interface of Digital Subscriber Line Access Module (DSLAM) and the line interface of SDH equipment. If a GPON provides an interface for connecting an SDH service, the FTTN and FTTB of the GPON are applied more flexibly and provide more diversified interfaces. Moreover, the access distance is prolonged by virtue of long transmission distance and high reliability of the SDH interfaces.

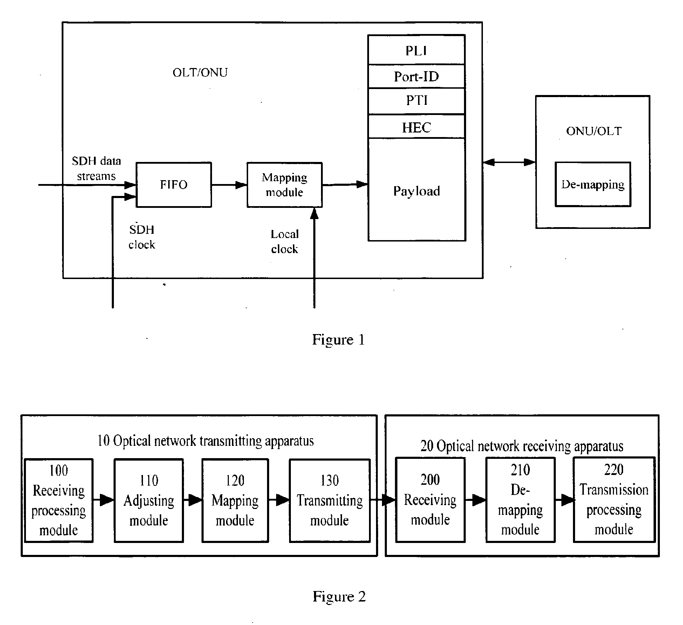

Figure 1 shows the structure of mapping a SDH frame to a GEM frame asynchronously in the prior art.

In the downlink transmission, an OLT receives an SDH frame data stream sent by the upper-layer network, and writes the SDH data stream into a First In First Out (FIFO) buffer. The mapping module reads the SDH frame data stream bytes from the FIFO buffer, and puts them into the payload area of the GEM frame. If offset exists between the SDH clock frequency and the local clock frequency, the payload area length of the GEM frame is changed, and the Payload frame Length Identifier (PLI) indicates that proper adjustment is required. The asynchronously mapped GEM frame is sent to an ONU. For the received GEM frame, the ONU resolves the SDH frame data stream of the payload area according to the change of the PLI value. In order to retrieve a clock from the SDH frame data stream, a Phased Locked Loop (PLL) is required for smoothing out the unevenness of data streams caused by de-asynchronous mapping. In order to ensure the quality of a recovery clock, a filtering circuit is required for filtering jitters.

In the uplink transmission, the ONU receives SDH frame data streams sent by the SDH interface device at the customer premises, and writes the SDH data streams into the FIFO buffer. The mapping module reads the data streams bytes of the SDH frame in the FIFO buffer, and puts them into the payload area of the GEM frame. If the SDH clock frequency is higher than the local clock frequency, the data stored in the FIFO buffer increases gradually. When the data stored in the FIFO buffer reaches the upper threshold value, the GEM frame needs to bear more bytes and the payload area becomes larger in order to prevent FIFO from overflow. If the SDH clock frequency is lower than the local clock frequency, the GEM frame bears less bytes and the payload area becomes smaller, when the data in the FIFO buffer is less than the lower threshold value. The OLT performs de-asynchronous mapping for the received GEM frame. The de-asynchronous mapping process is the same as the de-asynchronous mapping process of the ONU in the downlink transmission.

In the final analysis, in order for a GPON to transmit SDH frames in the prior art, a complicated de-asynchronous process needs to be performed at the receiver, and the rate unevenness caused by de-asynchronous mapping needs to be smoothed out through a PLL. Therefore, the system design for transmission of the high-speed TDM services such as SDH is technically more difficult. If a Voltage Controlled Oscillator (VCO) and a filtering circuit are added, the cost increases. Moreover, the change of the payload area of a GEM frame also increases the complexity of the uplink bandwidth allocation and the transmission control collaboration.

In addition, US 2004/246989 A1, which is published on 9 December 2004, discloses a system provides the capability to transmit SONET over PON, which simplifies the necessary conversions and provide improved functionality over existing techniques. The system for interfacing a Synchronous Optical Network to a Passive Optical Network comprises an Optical Line Termination unit operable to interface with the Synchronous Optical Network and with the Passive Optical Network, receive a downstream data signal from the Synchronous Optical Network and transmit the downstream data signal in SONET format over the Passive Optical Network, and receive an upstream data signal from the Passive Optical Network in a PON encapsulated SONET format and transmit the upstream data signal over the Synchronous Optical Network; and at least one Optical Network Unit operable to interface with the Passive Optical Network and with at least one end user, receive a downstream data signal from the Passive Optical Network and transmit the downstream data signal to the at least one end user, and receive an upstream data signal from the at least one end user and transmit the upstream data signal over the Passive Optical Network.

Document "Gigabit-capable Passive Optical Networks (GPON): General characteristics; G.984.1 (03/03)" ITU-T STANDARD IN FORCE GENEVA, CH, no. G.984.1 (03/03), which is published on 16 March 2003, describes a flexible optical fiber access network capable of supporting the bandwidth requirements of business and residential services and covers systems with nominal line rates of 1.2Gbit/s and 2.4Gbit/s in the downstream direction and 155 Mbit/s, 622 Mbit/s, 1.2Gbit/s and 2.4Gbit/s in the upstream direction. Both symmetrical and asymmetrical (upstream / downstream) Gigabit-capable Passive Optical Network (GPON) systems are described. This Recommendation proposes the general characteristics for GPON based on operators' service requirements.

### SUMMARY

The present invention provides a method, a system and an apparatus for transmitting SDH frames on a passive optical network, with a view to avoid the complicated de-asynchronous mapping process at the receiver required for a GPON to transmit SDH frames in the prior art.

The method in an embodiment of the present invention includes:
performing, by a transmitter, receiving processing for data streams of a SDH frame, adjusting bytes of the SDH frame according to an offset between a clock frequency of an SDH interface device and a clock frequency of the transmitter,
mapping an adjusted SDH frame data stream to a payload area of a Gigabit Passive Optical Network (PON) Encapsulation Method (GEM) frame synchronously, and sending a GPON Encapsulation Method (GEM) frame derived from synchronous mapping to a receiver ; and
performing, by a receiver, de-synchronization mapping for the GEM frame , retrieving data streams of the SDH frame, and performing transmission processing for the SDH frame data streams.

The process of the transmitter adjusting the bytes of the SDH frame includes:
using the pointer adjustment mechanism of the SDH Administration Unit (AU) to adjust the administration unit pointer, thus compensate for the clock frequency offset of the SDH interface device and the transmitter.

The receiving processing performed by the transmitter for the SDH frame data stream includes:
using an SDH line recovery clock to perform serial-parallel conversion, performing frame delimitation for parallel data, and performing descrambling for the frame-delimited data.

The transmission processing performed by the receiver for the SDH frame data stream includes:
performing frame delimitation, searching for the frame alignment bytes of the SDH frame, finding the boundary of the SDH frame, handling the section overhead bytes, and performing descrambling and serial-parallel conversion.

A system for transmitting SDH frames synchronously on an optical network, including:
an optical network transmitting apparatus, adapted to perform receiving processing for SDH frame data streams, adjust the bytes of the SDH frame according to the offset between the clock frequency of the SDH interface device and the clock frequency of the optical network transmitting apparatus, map the adjusted SDH frame data stream to the payload area of the GEM frame synchronously, and send the GEM frame derived from synchronous mapping to the optical network receiving apparatus; and
an optical network receiving apparatus, adapted to perform de-synchronization mapping for the GEM frame from the optical network transmitting apparatus, retrieve the SDH frame data stream, and perform transmission processing for the SDH frame data stream.
If the optical network transmitting apparatus is an OLT, the optical network receiving apparatus is an ONU;
If the optical network transmitting apparatus is an ONU, the optical network receiving apparatus is an OLT.

The optical network transmitting apparatus may further include:
a receiving processing module, adapted to use an SDH line recovery clock to perform serial-parallel conversion for the SDH frame data stream, perform frame delimitation for parallel data, and perform descrambling for the frame-delimited data;
an adjusting module, adapted to use a pointer adjustment mechanism of the AU to adjust the administration unit pointer and compensate for the clock frequency offset of the SDH interface device and the adjusting module;
a mapping module, adapted to map the adjusted SDH frame data stream to the payload area of the GEM frame synchronously; and
a transmitting module, adapted to send the GEM frame derived from synchronous mapping to the optical network receiving apparatus.

The optical network receiving apparatus may further include:
a receiving module, adapted to receive GEM frames sent by the optical network transmitting apparatus;
a de-mapping module, adapted to perform de-synchronization mapping for the GEM frame from the optical network transmitting apparatus, and retrieve the SDH frame data stream from the GEM frame; and
a transmission processing module, adapted to perform frame delimitation for SDH frame data streams, search for the frame alignment bytes of the SDH frame, find the boundary of the SDH frame, handle the section overhead bytes, and perform descrambling and serial-parallel conversion.

An optical network transmitting apparatus, including:
a receiving processing module, adapted to use an SDH line recovery clock to perform serial-parallel conversion for the SDH frame data stream, perform frame delimitation for parallel data, and perform descrambling for the frame-delimited data;
an adjusting module, adapted to use a pointer adjustment mechanism of the AU to adjust the administration unit pointer and compensate for the clock frequency offset of the SDH interface device and the adjusting module;
a mapping module, adapted to map the adjusted SDH frame data stream to the payload area of the GEM frame synchronously; and
a transmitting module, adapted to send the GEM frame derived from synchronous mapping to the optical network receiving apparatus.

An optical network receiving apparatus, including:
a receiving module, adapted to receive GEM frames sent by the optical network transmitting apparatus;
a de-mapping module, adapted to perform de-synchronization mapping for the GEM frame from the optical network transmitting apparatus, and retrieve the SDH frame data stream from the GEM frame; and
a transmission processing module, adapted to perform frame delimitation for SDH frame data streams, search for the frame alignment bytes of the SDH frame, find the boundary of the SDH frame, handle the section overhead bytes, and perform descrambling and serial-parallel conversion.

The present invention uses the AU pointer adjustment mechanism of the SDH to compensate for the asynchronous clock frequency offset, and applies the synchronous processing method to both mapping and de-mapping. Therefore, the SDH frame can be transmitted through a GPON without the complicated de-asynchronous mapping at the receiver, the system design is simplified, and the equipment cost is reduced.

### BRIEF DESCRIPTION OF THE DRAWINGS

Figure 1 shows the structure of mapping an SDH frame to a GEM frame asynchronously in the prior art;

Figure 2 shows the structure of a system according to an embodiment of the present invention;

Figure 3 shows the structure of a SDH frame;

Figure 4 shows the structure of a GEM frame;

Figure 5 shows the frame structure of mapping SDH to GEM synchronously;

Figure 6 is a transmission diagram of the method according to an embodiment of the present invention; and

Figure 7 is a flowchart of the method according to an embodiment of the present invention.

### DETAILED DESCRIPTION

Considering that complicated de-asynchronous mapping has to be performed at the receiver in order to transmit SDH frames on a GPON in the method of mapping an SDH frame to a GEM frame asynchronously in the prior art, the present invention uses an AU pointer adjustment mechanism of the SDH to compensate for the asynchronous clock frequency offset, so that both mapping and de-mapping are performed through synchronous processing and the problem in the prior art is solved.

Figure 2 shows the structure of a system according to an embodiment of the present invention. As shown in Figure 2, the system under the present invention includes an optical network transmitting apparatus 10 and an optical network receiving apparatus 20, as described below:
an optical network transmitting apparatus 10, adapted to perform receiving processing for SDH frame data streams, adjust the bytes of the SDH frame according to the offset between the clock frequency of the SDH interface device and the clock frequency of the optical network transmitting apparatus, map the adjusted SDH frame data stream to the payload area of the GEM frame synchronously, and send the GEM frame derived from synchronous mapping to the optical network receiving apparatus;
an optical network receiving apparatus 10, adapted to perform de-synchronization mapping for the GEM frame from the optical network transmitting apparatus, retrieve the SDH frame data stream, and perform transmission processing for the SDH frame data stream.

An optical network transmitting apparatus 10 includes a receiving processing module 100, an adjusting module 110, a mapping module 120, and a transmitting module 130, as described below:
a receiving processing module 100, connected to the adjusting module 110, and adapted to use an SDH line recovery clock to perform serial-parallel conversion for the SDH frame data stream, perform frame delimitation for parallel data, and perform descrambling for the frame-delimited data;
an adjusting module 110, connected to the receiving processing module 100 and the mapping module 120, and adapted to use a pointer adjustment mechanism of the administration unit to adjust the SDH administration unit pointer and compensate for the clock frequency offset of the SDH interface device and the adjusting module, and send the adjusted SDH frame data stream to the mapping module 120;
a mapping module 120, connected to the adjusting module 110 and the transmitting module 130, and adapted to map the SDH frame data stream from the adjusting module 110 to the payload area of the GEM frame synchronously, and send the GEM frame to the transmitting module 130; and
a transmitting module 130, connected to the optical network receiving apparatus 20 and the mapping module 120, and adapted to send the GEM frame from the mapping module 120 to the optical network receiving apparatus 20.

The optical network receiving apparatus 20 includes: a receiving module 200, a de-mapping module 210, and a transmission processing module 220, as described below:
a receiving module 200, connected to the optical network transmitting apparatus 10 and the de-mapping module 210, and adapted to receive the GEM frame sent by the optical network transmitting apparatus 10;
a de-mapping module 210, connected to the receiving module 200 and the transmission processing module 220, and adapted to perform de-synchronization mapping for the GEM frame from the receiving module 200, and retrieve the SDH frame data stream from the GEM frame; and
a transmission processing module, connected to the de-mapping module 210, and adapted to perform frame delimitation for SDH frame data streams, search for the frame alignment bytes of the SDH frame, find the boundary of the SDH frame, handle the section overhead bytes, and perform descrambling and serial-parallel conversion.

If the optical network transmitting apparatus is an OLT, the optical network receiving apparatus is an ONU; if the optical network transmitting apparatus is an ONU, the optical network receiving apparatus is an OLT.

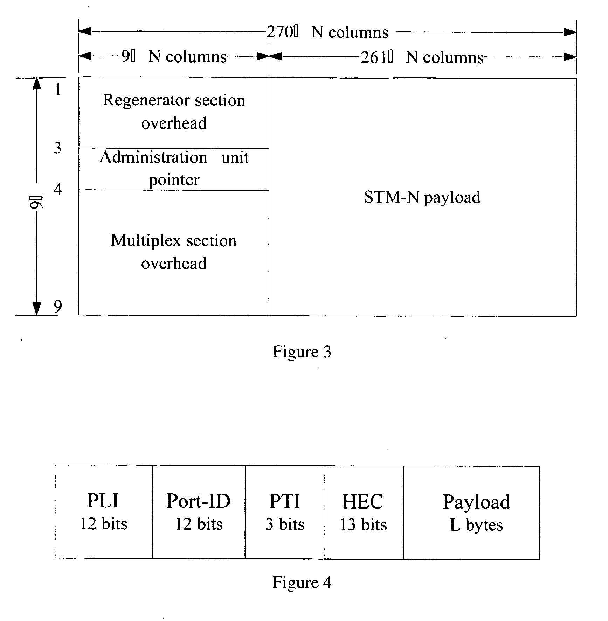

Figure 3 shows the structure of a SDH frame. As shown in Figure 3:
The SDH frame comes in different rate levels, and a GEM frame may bear three rate levels: STM-0, STM-1, and STM-4.
An SDH frame is divided into 9 rows and 270*N columns, of which the regenerator section overhead occupies the first 9*N columns of rows 1-3. The administration unit pointer occupies the first 9*N columns of row 4; the multiplex section overhead occupies the first 9*N columns of rows 5-9; and the STM-N payload occupies the last 261*N columns of rows 1-9.
If the rate level of an SDH frame is STM-0, the SDH frame is divided into 9 rows and 90 columns, of which the regenerator section overhead occupies the first 3 columns of rows 1-3; the administration unit pointer occupies the first 3 columns of row 4; the multiplex section overhead occupies the first 3 columns of rows 5-9; and the STM-0 payload occupies the last 87 columns of rows 1-9.

Figure 4 shows the structure of a GEM frame. As shown in Figure 4:
A GEM frame includes:
   a payload frame length identifier (PLI) which occupies 12 bits;
   a port identifier (Port-ID) which occupies 12 bits;
   a payload type indicator (PTI) which occupies 3;
   a detection field (HEC) which occupies 13 bits; and
   a payload which occupies L bytes, where L is indicated by the PLI.

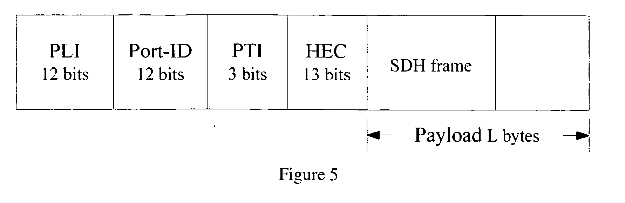

Figure 5 shows the frame structure of mapping SDH to GEM synchronously. As shown in Figure 5:
The SDH frame is mapped to the payload area of the GEM frame in the sequence of transmitting the bytes, where the transmission sequence of the GEM frame keeps the same as the mapping sequence.
The maximum size of the payload area of a GEM frame is 4095 bytes, while the STM-4 rate level of an SDH frame occupies 270*9*4=9720 bytes. Therefore, a GEM frame is unable to bear an SDH frame of the STM-4 rate level. In this case, the SDH frame must be transmitted in segments.
Generally, the payload area of a GEM frame has 2430 bytes, and an SDH frame of the STM-1 rate level contains also 2430 bytes. A GEM frame may transmit an SDH frame of the STM-1 rate level. If the rate level of an SDH frame is STM-4, an STM-4 frame may be divided into 4 segments on average for transmitting.

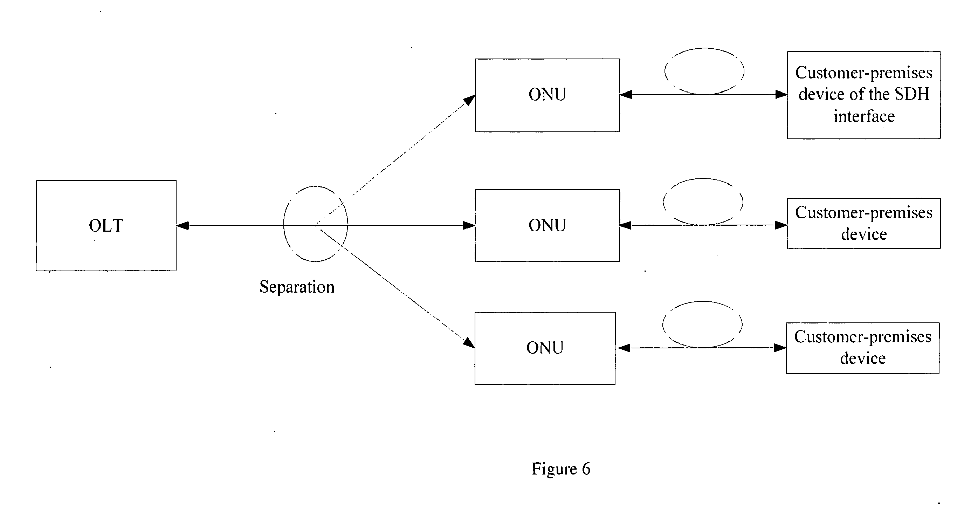

Figure 6 is a transmission diagram of the method according to an embodiment of the present invention. As shown in Figure 6:
In the downlink transmission, the OLT maps the SDH frame data stream to the GEM frame synchronously, and sends the synchronously mapped GEM frame to the ONU which communicates with the SDH interface. After performing de-synchronization mapping for the GEM frame, the ONU sends SDH frame data streams to the SDH interface device at the customer premises.
In the uplink transmission, the ONU that communicates with the SDH interface maps the received SDH frame data stream to the GEM frame synchronously, and sends the synchronously mapped GEM frame to the OLT.

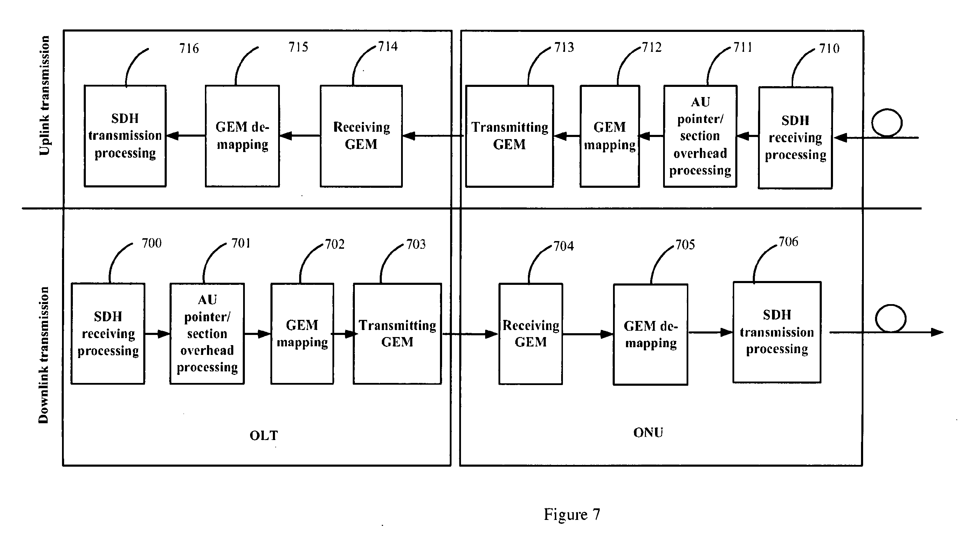

Figure 7 is a flowchart of the method in an embodiment of the present invention. As shown in Figure 7:
Before the optical network transmits the SDH frame data stream, a fixed bandwidth for transmitting 270*9*N bytes per 125 microseconds is allocated to the Traffic Container (T-CONT) which transmits SDH frames according to the rate level of the transmitted SDH frame, in order to ensure enough bandwidth for transmitting the SDH frames.

In the downlink transmission direction, the method includes the steps as described hereinafter.

Step 700: After receiving the SDH frame data stream from the upper-layer network, the OLT uses an SDH line recovery clock to perform serial-parallel conversion for the SDH frame data stream, performs frame delimitation for parallel data, and performs descrambling for the frame-delimited data.

Step 701: The OLT performs AU pointer interpretation for the SDH frame, and stores the SDH frame data bytes into the FIFO buffer. According to the threshold of stored bytes in FIFO, the AU pointer generates an AU pointer, and handles the corresponding bytes of section overhead, re-combining the transparent transmission overhead, the AU pointer and the data in the FIFO buffer into an SDH frame.

If the FIFO writing clock is faster than the reading clock, the bytes stored in the FIFO increase gradually. When the stored bytes reach the upper threshold, negative adjustment of the AU pointer occurs, and data bytes are transmitted through the negative adjustment location in the pointer bytes. If the FIFO writing clock is slower than the reading clock, the bytes stored in the FIFO decrease gradually. When the stored bytes reach the lower threshold, positive negative adjustment of AU pointer occurs, and filler bytes are inserted into the positive adjustment area.

Step 702: The OLT maps the SDH frame data streams to the payload area of the GEM frame synchronously.

Step 703: The Media Access Control (MAC) function at the OLT side sends a GEM frame to the ONU.

Step 704: The receiving processing function at the ONU side receives the GEM frame from the OLT.

Step 705: The ONU performs de-synchronization mapping for the GEM frame, and retrieves the SDH frame data stream from the GEM frame.

Step 706: The ONU performs frame delimitation for retrieved SDH frame data stream, searches for the frame alignment bytes of the SDH frame, finds the boundary of the SDH frame, handles the section overhead bytes as required, performs descrambling and serial-parallel conversion, and sends the processed SDH frame data stream to the SDH interface device.

In the uplink transmission direction, the method includes the steps as described hereinafter.

Step 710: After receiving the SDH frame data stream from the SDH interface device, the ONU uses an SDH line recovery clock to perform serial-parallel conversion for the SDH frame data stream, performs frame delimitation for parallel data, and performs descrambling for the frame-delimited data.

Step 711: The ONU performs AU pointer interpretation for the SDH frame, and stores the SDH frame data bytes into the FIFO buffer. According to the threshold of stored bytes in FIFO, the AU pointer generates an AU pointer, and handles the corresponding bytes of section overhead, re-combining the transparent transmission overhead, the AU pointer and the data in the FIFO buffer into an SDH frame.

If the FIFO writing clock is faster than the reading clock, the bytes stored in the FIFO increase gradually. When the stored bytes reach the upper threshold, negative adjustment of the AU pointer occurs, and data bytes are transmitted through the negative adjustment location in the pointer bytes. If the FIFO writing clock is slower than the reading clock, the bytes stored in the FIFO decrease gradually. When the stored bytes reach the lower threshold, positive negative adjustment of AU pointer occurs, and filler bytes are inserted into the positive adjustment area.

Step 712: The ONU maps the SDH data stream to the payload area of the GEM frame synchronously.

Step 713: The transmitting control function at the ONU side sends a GEM frame to the OLT.

Step 714: The Media Access Control (MAC) function at the OLT side receives the GEM frame from the ONU.

Step 715: The OLT performs de-synchronization mapping for the GEM frame, and retrieves the SDH frame data stream from the GEM frame.

Step 716: The OLT performs frame delimitation for retrieved SDH frame data stream, searches for the frame alignment bytes of the SDH frame, finds the boundary of the SDH frame, handles the section overhead bytes as required, performs descrambling and serial-parallel conversion, and sends the processed SDH frame data stream to the upper-layer network.

Although the invention has been described through some exemplary embodiments, the invention is not limited to such embodiments. It is apparent that those skilled in the art can make various modifications and variations to the present invention without departing from the scope of the present invention. The present invention is intended to cover these modifications and variations provided that they fall in the scope of protection defined by the following claims.

## Claims

1. A method for transmitting Synchronous Digital Hierarchy (SDH) frames on an optical network, **characterized in** comprising:
performing, by a transmitter, receiving processing for data streams of a SDH frame, adjusting bytes of the SDH frame according to an offset between a clock frequency of an SDH interface device and a clock frequency of the transmitter (701), wherein the process of the transmitter adjusting bytes of the SDH frame comprises:
using a pointer adjustment mechanism of an SDH administration unit to adjust an SDH administration unit pointer, and thus compensate for the clock frequency offset of the SDH interface device and the transmitter;
mapping an adjusted SDH frame data stream to a payload area of a Gigabit Passive Optical Network (PON) Encapsulation Method (GEM) frame synchronously (702), and sending a GPON Encapsulation Method (GEM) frame derived from synchronous mapping to a receiver (703); and
performing, by a receiver, de-synchronization mapping for the GEM frame (705), retrieving data streams of the SDH frame, and performing transmission processing for the SDH frame data streams (706).

2. The method of claim 1, wherein the receiving processing of the transmitter for SDH frame data streams comprises:
using an SDH line recovery clock to perform serial-parallel conversion, performing frame delimitation for parallel data, and performing descrambling for frame-delimited data (700).

3. The method of claim 1, wherein the transmission processing of the receiver for SDH frame data streams comprises:
performing frame delimitation, searching for a frame alignment bytes of the SDH frame, finding a boundary of the SDH frame, handling section overhead bytes, and performing descrambling and serial-parallel conversion (706).

4. The method of claim 1, wherein,
if the optical network transmitting apparatus is an Optical Line Terminal (OLT), the optical network receiving apparatus is an Optical Network Unit (ONU); and
if the optical network transmitting apparatus is an ONU, the optical network receiving apparatus is an OLT.

5. An optical network transmitting apparatus, **characterized in** comprising:
a receiving processing module (100), adapted to use an Synchronous Digital Hierarchy (SDH) line recovery clock to perform serial-parallel conversion for an SDH frame data stream, perform frame delimitation for parallel data, and perform descrambling for frame-delimited data;
an adjusting module (110), adapted to use a pointer adjustment mechanism of an SDH administration unit to adjust a pointer of the SDH administration unit and compensate for clock frequency offset of an SDH interface device and the adjusting module;
a mapping module (120), adapted to map an adjusted SDH frame data stream to a payload area of a GPON Encapsulation Method (GEM) frame synchronously; and
a transmitting module (130), adapted to send the GEM frame derived from synchronous mapping to a optical network receiving apparatus.

6. A system for transmitting Synchronous Digital Hierarchy (SDH) frames on an optical network, comprising:
an optical network transmitting apparatus according to claim 5, the system further comprising:
an optical network receiving apparatus (20), adapted to perform de-synchronization mapping for the GEM frame from the optical network transmitting apparatus, retrieve the SDH frame data stream, and perform transmission processing for the SDH frame data stream.

7. The system of claim 6, wherein the optical network receiving apparatus comprises:
a receiving module (200), adapted to receive GPON Encapsulation Method (GEM) frames sent by an optical network transmitting apparatus;
a de-mapping module (210), adapted to perform de-synchronization mapping for the GEM frame from the optical network transmitting apparatus, and retrieve an Synchronous Digital Hierarchy (SDH) frame data stream from the GEM frame; and
a transmission processing module (220), adapted to perform frame delimitation for SDH frame data streams, search for a frame alignment bytes of the SDH frame, find a boundary of the SDH frame, handle section overhead bytes, and perform descrambling and serial-parallel conversion.

8. The system of claim 6, wherein:
if the optical network transmitting apparatus is an Optical Line Terminal (OLT), the optical network receiving apparatus is an Optical Network Unit (ONU); and
if the optical network transmitting apparatus is an ONU, the optical network receiving apparatus is an OLT.

## Patentansprüche

1. Verfahren zum Senden von Rahmen mit synchroner digitaler Hierarchie (SDH-Rahmen) in einem optischen Netz, **dadurch gekennzeichnet, dass** es Folgendes umfasst:
Ausführen durch einen Sender einer Empfangsverarbeitung für Datenströme eines SDH-Rahmens, Einstellen von Byte des SDH-Rahmens gemäß einem Versatz zwischen einer Taktfrequenz einer SDH-Schnittstellenvorrichtung und einer Taktfrequenz des Senders (701), wobei der Prozess, bei dem der Sender Byte des SDH-Rahmens einstellt, Folgendes umfasst:
Verwenden eines Zeigereinstellmechanismus einer SDH-Administrationseinheit, um einen SDH-Administrationseinheitszeiger einzustellen und um so den Taktfrequenzversatz zwischen der SDH-Schnittstellenvorrichtung und dem Sender auszugleichen;
synchrones Abbilden eines Datenstroms eines eingestellten SDH-Rahmens auf einen Nutzlastbereich eines Einkapselungsverfahrens-Rahmens (GEM-Rahmen) eines passiven optischen Gigabit-Netzes (PON) (702) und Senden eines GPON-Einkapselungsverfahrens-Rahmens (GEM-Rahmen), der aus der synchronen Abbildung abgeleitet wird, zu einem Empfänger (703); und
Ausführen durch einen Empfänger einer Desynchronisationsabbildung für den GEM-Rahmen (705), Wiedergewinnen von Datenströmen des SDH-Rahmens und Ausführen einer Sendeverarbeitung für die SDH-Rahmen-Datenströme (706).

2. Verfahren nach Anspruch 1, wobei die Empfangsverarbeitung des Senders für SDH-Rahmen-Datenströme Folgendes umfasst:
Verwenden eines SDH-Leitungswiedergewinnungstakts, um eine Seriell/Parallel-Umsetzung auszuführen, Ausführen einer Rahmenentgrenzung für parallele Daten und Ausführen einer Entwürfelung für rahmenentgrenzte Daten (700).

3. Verfahren nach Anspruch 1, wobei die Sendeverarbeitung des Empfängers für SDH-Rahmen-Datenströme Folgendes umfasst:
Ausführen einer Rahmenentgrenzung, Suchen nach Rahmensynchronisations-Byte für den SDH-Rahmen, Finden einer Grenze des SDH-Rahmens, Handhaben von Abschnitts-Overhead-Byte und Ausführen einer Entwürfelung und einer Seriell/Parallel-Umsetzung (706).

4. Verfahren nach Anspruch 1, wobei
dann, wenn die Sendevorrichtung des optischen Netzes ein Endgerät einer optischen Leitung (OLT) ist, die Empfangsvorrichtung des optischen Netzes eine Einheit des optischen Netzes (ONU) ist; und
dann, wenn die Sendevorrichtung des optischen Netzes eine ONU ist, die Empfangsvorrichtung des optischen Netzes ein OLT ist.

5. Sendevorrichtung für optisches Netz, **dadurch gekennzeichnet, dass** sie Folgendes umfasst:
ein Empfangsverarbeitungsmodul (100), das dazu ausgelegt ist, einen Leitungswiedergewinnungstakt für synchrone digitale Hierarchie (SDH) zu verwenden, um eine Seriell/Parallel-Umsetzung für einen SDH-Rahmen-Datenstrom auszuführen, eine Rahmenentgrenzung für parallele Daten auszuführen und eine Entwürfelung für rahmenentgrenzte Daten auszuführen;
ein Einstellmodul (110), das dazu ausgelegt ist, einen Zeigereinstellmechanismus einer SDH-Administrationseinheit zu verwenden, um einen Zeiger der SDH-Administrationseinheit einzustellen und um einen Taktfrequenzversatz einer SDH-Schnittstellenvorrichtung und des Einstellmoduls auszugleichen;
ein Abbildungsmodul (120), das dazu ausgelegt ist, einen eingestellten SDH-Rahmen-Datenstrom auf einen Nutzlastbereich eines GPON-Einkapselungsverfahrens-Rahmens (GEM-Rahmen) synchron abzubilden; und
ein Sendemodul (130), das dazu ausgelegt ist, den GEM-Rahmen, der aus der synchronen Abbildung abgeleitet wird, zu einer Empfangsvorrichtung des optischen Netzes zu senden.

6. System zum Senden von Rahmen mit synchroner digitaler Hierarchie (SDH) auf einem optischen Netz, das Folgendes umfasst:
eine Sendevorrichtung des optischen Netzes nach Anspruch 5, wobei das System ferner Folgendes umfasst:
eine Empfangsvorrichtung (20) des optischen Netzes, die dazu ausgelegt ist, eine Desynchronisationsabbildung für den GEM-Rahmen von der Sendevorrichtung des optischen Netzes auszuführen, den SDH-Rahmen-Datenstrom wiederzugewinnen und eine Sendeverarbeitung für den SDH-Rahmen-Datenstrom auszuführen.

7. System nach Anspruch 6, wobei die Empfangsvorrichtung des optischen Netzes Folgendes umfasst:
ein Empfangsmodul (200), das dazu ausgelegt ist, GPON-Einkapselungsverfahrens-Rahmen (GEM-Rahmen), die von einer Sendevorrichtung des optischen Netzes gesendet werden, zu empfangen;
ein Entabbildungsmodul (210), das dazu ausgelegt ist, eine Desynchronisationsabbildung für den GEM-Rahmen von der Sendevorrichtung des optischen Netzes auszuführen und einen Datenstrom aus Rahmen mit synchroner digitaler Hierarchie (SDH-Rahmen) aus dem GEM-Rahmen wiederzugewinnen; und
ein Sendeverarbeitungsmodul (220), das dazu ausgelegt ist, eine Rahmenentgrenzung für SDH-Rahmen-Datenströme auszuführen, nach Rahmensynchronisations-Byte des SDH-Rahmens zu suchen, eine Grenze des SDH-Rahmens zu finden, Abschnitts-Overhead-Byte zu handhaben und eine Entwürfelung und eine Seriell/Parallel-Umsetzung auszuführen.

8. System nach Anspruch 6, wobei:
dann, wenn die Sendevorrichtung des optischen Netzes ein Endgerät einer optischen Leitung (OLT) ist, die Empfangsvorrichtung des optischen Netzes eine Einheit des optischen Netzes (ONU) ist; und
dann, wenn die Sendevorrichtung des optischen Netzes eine ONU ist, die Empfangsvorrichtung des optischen Netzes ein OLT ist.

## Revendications

1. Procédé d'émission de trames à Hiérarchie Numérique Synchrone (SDH, Synchronous Digital Hierarchy) sur un réseau optique, **caractérisé en ce qu'**il comprend :
l'exécution, par un émetteur, d'un traitement de réception de flux de données d'une trame SDH, l'ajustement d'octets de la trame SDH conformément à un décalage entre une fréquence d'horloge d'un dispositif d'interface SDH et une fréquence d'horloge de l'émetteur (701), dans lequel l'ajustement d'octets de la trame SDH par l'émetteur comprend :
l'utilisation d'un mécanisme d'ajustement de pointeur d'une unité d'administration de SDH pour ajuster un pointeur d'unité d'administration de SDH et ainsi compenser le décalage de la fréquence d'horloge du dispositif d'interface SDH et de l'émetteur ;
la mise en correspondance de manière synchrone (702) d'un flux de données de trame SDH ajusté avec une zone de charge utile d'une trame de Procédé d'Encapsulation pour Réseau Optique Passif (PON, Passive Optical Network) Gigabit, GEM (Gigabit Encapsulation Method), et l'envoi à un récepteur (703) d'une trame de Procédé d'Encapsulation GPON (GEM) déterminée à partir de la mise en correspondance synchrone ; et
l'exécution, par un récepteur, d'une mise en correspondance de synchronisation inverse pour la trame GEM (705), l'extraction de flux de données de la trame SDH, et l'exécution d'un traitement d'émission pour les flux de données de trame SDH (706).

2. Procédé selon la revendication 1, dans lequel le traitement de réception effectué par l'émetteur pour les flux de données de trame SDH comprend :
l'utilisation d'une horloge de récupération de ligne SDH pour effectuer une conversion série-parallèle, l'exécution d'une délimitation de trame pour des données parallèles et l'exécution d'un désembrouillage pour des données à trame délimitée (700).

3. Procédé selon la revendication 1, dans lequel le traitement démission du récepteur pour des flux de données de trame SDH comprend :
l'exécution d'une délimitation de trame, la recherche d'un octet d'alignement de trame de la trame SDH, le fait de trouver une frontière de la trame SDH, la manipulation d'octets de surdébit de section, et l'exécution d'un désembrouillage et d'une conversion série-parallèle (706).

4. Procédé selon la revendication 1, dans lequel
si l'appareil d'émission pour réseau optique est un Terminal de Ligne Optique (OLT, Optical Line Terminal), l'appareil de réception pour réseau optique est une Unité pour Réseau Optique (ONU, Optical Network Unit) ; et
si l'appareil d'émission pour réseau optique est une unité ONU, l'appareil de réception pour réseau optique est un terminal OLT.

5. Appareil d'émission pour réseau optique, **caractérisé en ce qu'**il comprend :
un module de traitement de réception (100), conçu pour utiliser une horloge de récupération de ligne à Hiérarchie Numérique Synchrone (SDH) afin d'effectuer une conversion série-parallèle pour un flux de données de trame SDH, effectuer une délimitation de trame pour des données parallèles, et effectuer un désembrouillage pour des données à trame délimitée ;
un module d'ajustement (110), conçu pour utiliser un mécanisme d'ajustement de pointeur d'une unité d'administration de SDH afin d'ajuster un pointeur de l'unité d'administration de SDH et compenser le décalage de la fréquence d'horloge d'un dispositif d'interface SDH et du module d'ajustement ;
un module de mise en correspondance (120), conçu pour mettre en correspondance de manière synchrone un flux de données de trame SDH ajusté avec une zone de charge utile d'une trame pour Procédé d'Encapsulation GPON (GEM) ; et
un module d'émission (130), conçu pour envoyer la trame GEM déduite de la mise en correspondance synchrone à un appareil de réception pour réseau optique.

6. Système pour émettre des trames à Hiérarchie Numérique Synchrone (SDH) sur un réseau optique, comprenant :
un appareil d'émission pour réseau optique selon la revendication 5, le système comprenant en outre :
un appareil de réception pour réseau optique (20), conçu pour effectuer une mise en correspondance de synchronisation inverse pour la trame GEM provenant de l'appareil d'émission pour réseau optique, extraire le flux de données de trame SDH, et effectuer un traitement d'émission pour le flux de données de trame SDH.

7. Système selon la revendication 6, dans lequel l'appareil de réception pour réseau optique comprend :
un module de réception (200), conçu pour recevoir des trames de Procédé d'Encapsulation GPON (GEM) envoyées par un appareil d'émission pour réseau optique ;
un module de mise en correspondance inverse (210), conçu pour effectuer une mise en correspondance de synchronisation inverse pour la trame GEM provenant de l'appareil d'émission pour réseau optique, et extraire un flux de données de trame à Hiérarchie Numérique Synchrone (SDH) de la trame GEM ; et
un module de traitement d'émission (220), conçu pour effectuer une délimitation de trame pour des flux de données de trame SDH, rechercher un octet d'alignement de trame de la trame SDH, trouver une frontière de la trame SDH, manipuler des octets de surdébit de section, et effectuer un désembrouillage et une conversion série-parallèle.

8. Système selon la revendication 6, dans lequel :
si l'appareil d'émission pour réseau optique est un Terminal de Ligne Optique (OLT), l'appareil de réception pour réseau optique est une Unité pour Réseau Optique (ONU) ; et
si l'appareil d'émission pour réseau optique est une unité ONU, l'appareil de réception pour réseau optique est un terminal OLT.
